# EUROPEAN PATENT APPLICATION

(11) **EP 0 838 619 A1**
(43) Date of publication of application: **29.04.1998**
(21) Application number: 96307723.5
(22) Date of filing: 25.10.1996
(51) Int. Cl.: F16K 21/12

(54) **Self-closing valve**

(71) Applicant: Siam Sanitary Fittings Co. Ltd., Don Muang, Bangkok 12120 (TH)
(72) Inventor: Leekamnerdthai, Mongkol, Don Muang Bangkok (TH)
(74) Representative: Evans, David Charles

(57) **Abstract**

The present invention provides a fluid supply control device (10), comprising a chamber (38) adapted to contain fluid at a system pressure, partition means (42) within said chamber and serving to define first (104) and second (106) compartments in said chamber, which partition means is movable in said chamber thereby to alter the relative size of each of said compartments, fluid outlet (26) associated with said second compartment (106), fluid outlet closure means (46,47) adapted to move with said partition means and adapted in a rest position to obturate the fluid outlet of said second compartment and in an open position to allow fluid flow from said outlet, fluid pressure release means (58,68,67,72,110) for said first compartment (104), the arrangement being such that operation of the fluid pressure release means causes or allows release of pressure from said first compartment, so that the resultant pressure differential across said partition means (42) causes said partition means to move, thereby causing said closure means to move to the open position. Automatic cut-off means (105) are disclosed as well as a device to alter the time period before cut-off (16).

## Description

The present invention concerns the control of water flow in a pressurised water system, and particularly relates to valves used in taps or faucets for the selective supply of fluid.

Taps and faucets are used in many applications for the selective supply of water to wash-basins, water-fountains, baths, showers or other water supply points in buildings. Such taps typically include a valve member adapted to approach a valve seat by means of threaded rotation by an associated tap handle. When the valve member engages the valve seat, water flow is prevented. Water may be released by rotation of the handle to cause said valve member to depart the valve seat.

Such mechanisms have been in use for decades. One problem found is that, unless the tap is manually rotated to shut off completely the water supply, a tap, once opened, will continue to allow water flow indefinitely. Thus, unless the user of the tap is conscientious, there is a potential for considerable waste of water. In addition such taps encourage the user to run the tap for as long as a washing process is carried out, rather than filling the basin and then washing. Such a mechanism, therefore, tends to encourage, or at least allow, waste of water. This may be particularly serious where water is scarce and is a valuable resource, or where flooding is likely to arise if the water supply is left running.

The aforementioned problem of waste has been addressed by the production of faucets which cut-off automatically after a time period judged to be sufficient for a typical washing process.

Typically, such faucets include a cylindrical bore containing water at the system pressure. A piston in the bore blocks an outlet for the fluid. When it is desired for water to flow, the user presses a plunger which acts on said piston, thereby forcing the piston downwards in the bore. As the piston moves downwards, water in the lower part of the bore is allowed into the upper section of the cylinder by elastic deformation of a resilient cup ring incorporated in the piston. The deformation of the cup ring allows fluid to flow in between the bore and the rest of the piston. The downwards motion of the piston uncovers the fluid outlet, thereby allowing fluid to flow out of the bore and to an outlet.

A small orifice in a lower surface of the bore allows fluid to return into the lower section of the cylinder. A compression spring operative between the plunger and a housing of the faucet urges the piston to return to its original position, and an influx of water through the orifice gradually allows the piston to move back into position, thereby obturating the fluid outlet.

In use, a user presses down on the plunger and water starts to flow from the faucet. Water flow continues until the piston is has returned to its original position. The rate at which the piston returns is controlled by the compression spring compliance and the size of the orifice which allows replacement water into the lower section of the bore.

A number of problems have been found to arise from this mechanism. Firstly, the operation of the plunger requires a high degree of force from the operator because the piston is forced downwards against an incompressible volume of water which can only be displaced by flow past the deformed cup ring. Hence the force required to operate the faucet is high, and this can cause problems for users such as children, the disabled or elderly/ arthritic people.

In addition, the very high flow rates which are induced as water flows past the cup ring induces accelerated hydrodynamic wear of the ring and the adjacent bore. This eventually compromises the seal between bore and cup ring, which allows the piston to be able to return immediately to its closed position once depressed. Thus, in this damaged condition, the plunger must be continuously depressed for fluid to flow.

There is a need for a valve system which is capable of being operated with less force than current types, and which is less prone to wear of crucial components.

According to the present invention, there is provided a fluid supply control device, comprising:-
- a chamber adapted to contain fluid at a system pressure,
- partition means within said chamber and serving to define first and second compartments in said chamber, which partition means is movable in said chamber thereby to alter the relative size of each of said compartments,
- a fluid outlet associated with said second compartment,
- fluid outlet closure means adapted to move with said partition means and adapted in a rest position to obturate the fluid outlet of said second compartment and in an open position to allow fluid flow from said outlet,
- fluid pressure release means for said first compartment,
   the arrangement being such that operation of the fluid pressure release means causes or allows release of pressure from said first compartment, so that the resultant pressure differential across said partition means causes said partition to move, thereby causing said closure means to move to the open position.

In this way fluid flow may be initiated simply by releasing pressure from the chamber. The fluid pressure in the chamber is thereby utilised to facilitate the release process. Because, unlike the prior art devices, no water is forced past the partition means during use, wear of the partition means components is much reduced. This make the device of the present invention particularly suitable for use where impure, dirty or particulate-entrained water is present in the supply.

The system pressure is preferably above ambient atmospheric pressure. The pressure may be provided by gravity feed in said water supply, or by pumping.

The pressure release means may be means to increase the volume of said second compartment, but preferably said pressure release means is adapted to permit selective release of fluid from the compartment. The pressure release means may comprise a spring-return valve adapted to release a limited amount of water before returning to a dosed condition. Activation of the spring return valve by the operator will therefore cause a release of pressure which results in water flow.

The second compartment is preferably provided with one or more fluid inlets in communication with said fluid supply. In this way fluid pressure is maintained during use.

The fluid supply may comprise fluid having different characteristics. For example fluid associated with one inlet may be heated, while that associated with another inlet may be cold. In this way hot and cold fluids may enter into the second compartment on activation so that warm fluid suitable for washing may flow out of the device.

The first compartment may be provided with a refill orifice in communication with fluid at the system pressure, thereby to allow controlled pressure recovery in said first compartment to the system pressure. As the pressure returns to said first compartment, the partition will return towards the second compartment and the closure means will eventually obturate the outlet. In this way an automatic cut-off is provided.

The orifice may communicate with the second compartment to provide said fluid at the system pressure.

The length of time before fluid supply is cut-off may be varied by altering the size of said orifice. The size may be fixed during manufacture, but in one embodiment said orifice may be provided with throttle means to adjust the effective orifice size.

The throttle means may be user-operable from the exterior of the chamber.

In this way the cut-off period may be adjusted as required for the particular application of the device, or variations in system pressure may be compensated for.

In one embodiment the throttle means is a needle valve in the orifice. Other suitable throttle means will be apparent to the person skilled in the art.

The throttle means may be removable to facilitate access to said orifice for cleaning / unblocking thereof from time to time.

The partition means may comprise a partition adapted for translation in said chamber. A seal may be provided between said partition and an interior surface of said chamber, to maintain sealing contact during sliding.

In another aspect of the invention a fluid supply control device includes a partition adapted divide fluid in one part of the device from fluid in another part, and further adapted to move by sliding against a mechanism surface, and wherein a seal is provided between said partition and said surface, characterised in that said seal is made of leather.

Leather absorbs water and expands to fit any discontinuities in the mechanism surface, thereby maintaining an effective seal even where wear of the surface occurs during use. Such a seal is particularly useful where hydrodynamic wear and/or water-entrained abrasive particulate wear is likely.

Another advantage of the use of leather for the cup-seal material is that it tends to polish surfaces in contact as it slides over them, thereby improving the fluid seal and reliability of the sliding action.

Following is a description by way of example only and with reference to the accompanying drawings of methods of putting the invention into effect.

In the drawings:-
Figure 1 is a perspective view of an automatic cut-off, water supply device according to the present invention.
Figure 2 is an exploded sectional view of the same device.
Figure 3 is an assembled sectional view of a vertical plane through the line A-A' shown in figure 1.
Figure 4 is an assembled sectional view through the line X-X' shown in figure 1.
Figure 5 is a sectional view through a faucet including a device according to the present invention, shown disposed on a portion of a basin.

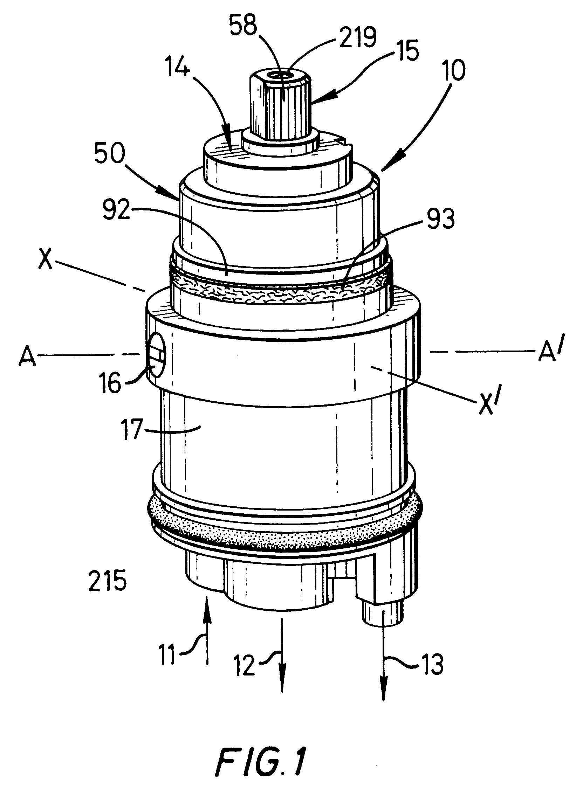

An automatic cut-off water supply device 10 in figure 1 comprises a generally cylindrical housing 10. The housing is provided with a water supply inlet port 11, an outlet port 12 and a pressure release drain port 13; the respective arrows indicate the direction of fluid flow in use. A top surface 14 of the housing is provided with an activation knob 15, depression of which activates the device for delivery of fluid, as will de described hereinafter.

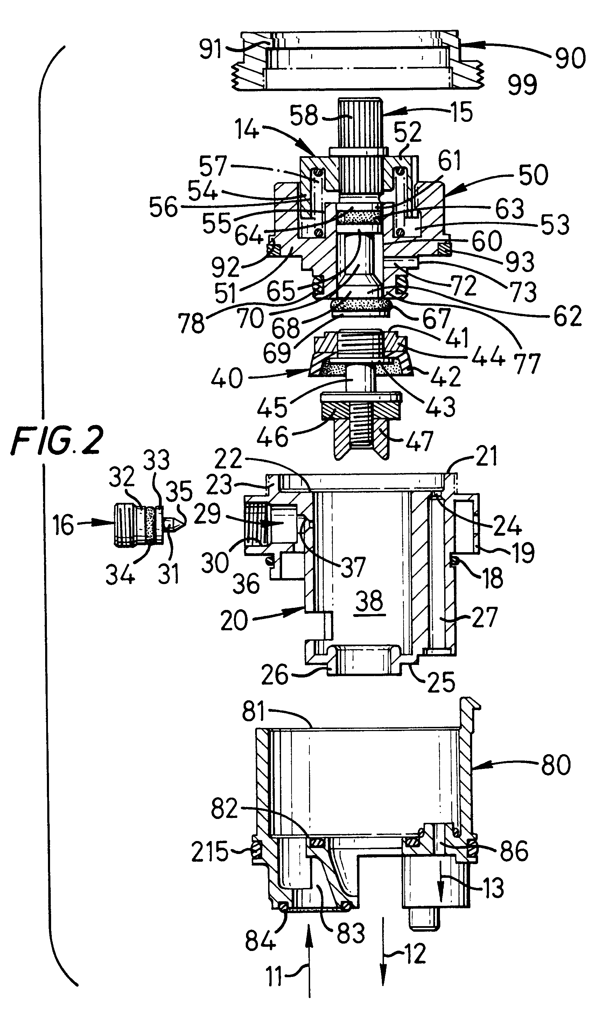

In figure 2 a generally cylindrical body member 20 has an upper end 21. The upper end of the body is stepped outwards to form an annular collar 23. The a lower surface of the collar forms a ledge 22. The ledge is provided with a drainage hole 24. The drainage hole connects with a drainage pipe 27. The pipe extends downwards through a sidewall 17 of the body member to a lower end 25 of the body. The lower end of the body member necks for closure as far as an annular sleeve 26.

Under the collar 23, a radial bore 29 bore extends towards an interior 38 of the cylinder. The bore is truncated at a circular stopper surface 36. A frusto-conical refill orifice 37 is formed in the stopper surface. The orifice pierces the sidewall providing a path into the cylindrical cavity 38 of the body.

The bore 29 is threaded on an interior surface 30 to receive a corresponding threaded plug 16. The plug is generally cylindrical in configuration and is provided at one end with a spigot 31. The spigot is provided with two axially disposed annular washers 32,33. The washers sandwich a toroidal rubber seal 34. A distal end of said spigot necks to a point 35. The point is configured to nestle into the frusto-conical orifice 37 of the sidewall when in position.

A generally cylindrical piston assembly 40 for the cylindrical cavity 38 includes an annular partition member 41 mounted axially on a rod 45. The partition member includes a cup seal 42 sandwiched between a lower annular stopper 43 and an annular upper end piece 44. The end piece threadably engages said rod. A lower end of the rod is provided with an annular valve member 46. The valve member is held on the rod by nut 47. The nut threadably engages the rod 45.

A pressure release mechanism is a generally cylindrical assembly 50. The mechanism includes an annular chassis member 51. The chassis member has a upper end 52. The upper end is provided with an annular co-axial recess 53. Inside the recess an end cap 54 is disposed. An annular gap is formed between the end cap sidewall 56 and an inner annular lip 55 of chassis member. A compression spring 57 is disposed in the gap.

The end cap is pierced by a push-rod 58. The push rod has an upper end 15 which is fixed to the end cap 54 to move there with. The upper end 15 is provided with an gnarled surface finish. A lower end of the pushrod extends through a central bore 60 in the chassis. The lower end of the pushrod is divided into top and bottom portions 61,62 respectively. The top portion 61 carries a toroidal rubber seal 63 sandwiched between upper and lower annular lips 64,65 carried on the pushrod. The bottom portion 62 of the pushrod is carries another toroidal seal 67 which is similarly mounted between upper and lower annular lips 68,69. A middle section 70 is defined between said top and bottom portions of the lower end of the pushrod. The middle section, along with the central chassis bore 60, defines an annular drainage cavity. The chassis bore is provided with a drainage tunnel 72 which extends radially through the chassis member to an exit port 73.

A housing for the device is a generally cylindrical wall 80 in figure 2. The wall has an open top end 81. The top end is provided with a barb element which is adapted to inter- lock sleeve 19 of the body member. The housing is closed at a bottom end by a floor 82. The floor is pierced by an inlet orifice 83. A lower end of the inlet orifice is provided with a toroidal rubber seal 84 for water tight engagement with a water supply pipe (not shown). A central hole in the floor is an outlet port 12. The outlet port is provided with a chicane which deflects the full force of out-flowing water. The outlet port engages with a fluid spout (not shown). Another hole is provided on an opposite side of the floor to the inlet orifice 83. The said another hole is a drainage orifice 86.

The method of assembly is to place the cylindrical body 20 inside the open end 81 of the housing 80. A toroidal seal 18 disposed in a recess on the exterior of the body 20 forms a water tight seal between the housing and cylindrical body.

The plug 16 is then entered into the bore 29 by screwing. Piston 40 is loaded into the cavity 38 in the body 20. Cup seal 42 has a slightly flared configuration to ensure an intimate contact is obtained between the cup seal and the interior surface of the cavity.

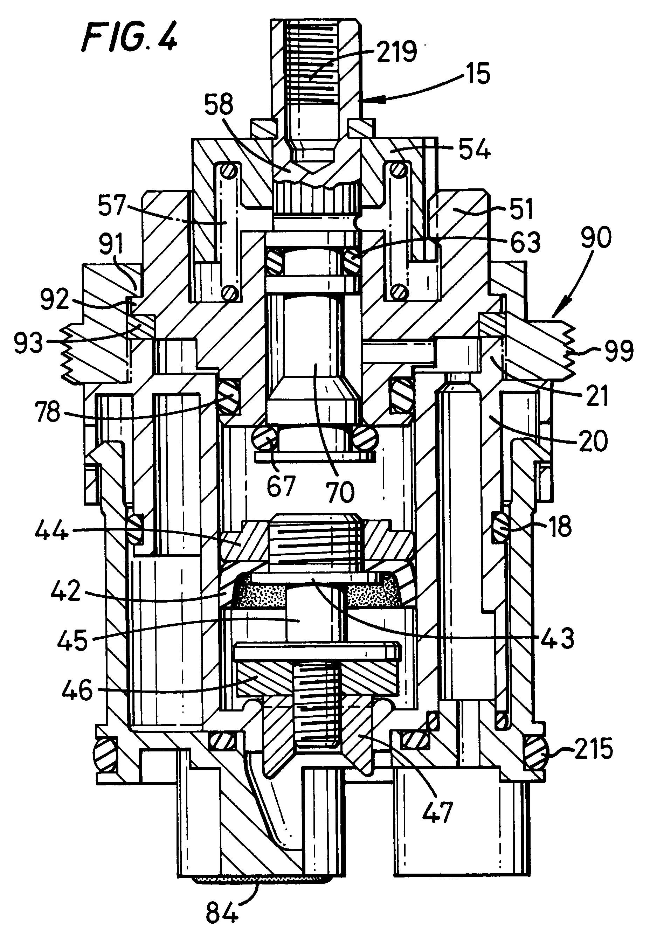

The top of the body member is closed by the engagement of the pressure release mechanism 50 with the annular collar 23 of the top end 21 of the body 20. A lower distal portion 77 of said chassis member 51 is provided with a toroidal seal 78. the seal is disposed in a corresponding recess to the distal portion. The seal 78 forms a water tight interface between the chassis member 51 and the interior surface of the body member cavity 38. The pressure release mechanism is held in place by means of an end ring 90 shown in figure 4. The end ring has an upper annular lip 91 which hooks over an annular ridge 92 on the exterior surface of the chassis member 51. A flat washer 93 is disposed between the ridge 92 and the upper end 21 of body member 20.

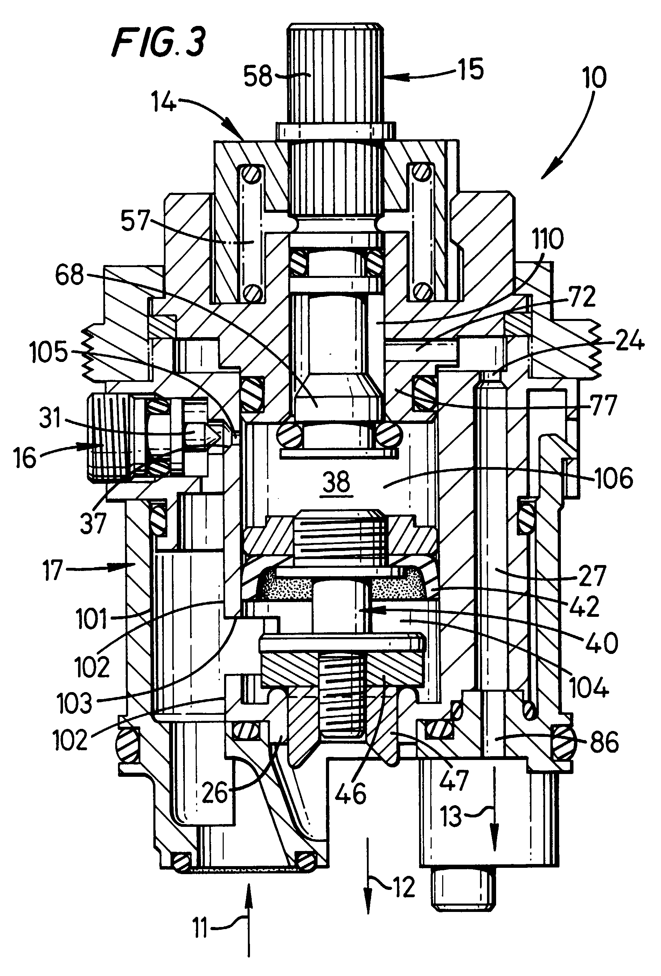

The above-described apparatus is shown assembled in figures 3 and 4.

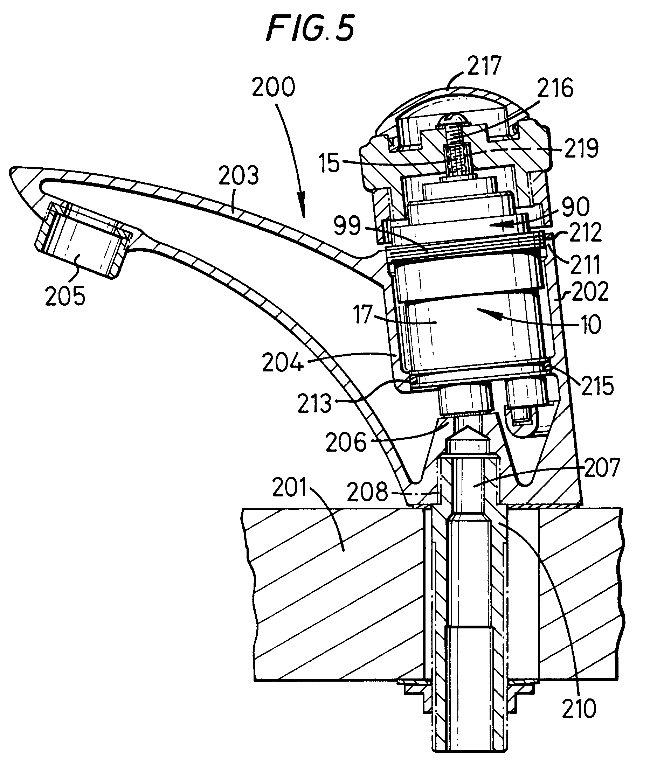

In figure 5 a water control device as described in the foregoing is shown mounted in a faucet 200 disposed on a basin wall 201. The faucet comprises a generally cylindrical body member 202. The body member has a spout extension 203 which extends at an upwards incline radially away from a cylindrical side wall 204 of the body member. The spout is provided at its distal end with a downwards facing exit orifice 205.

A lower end of the body member forms an upwardly narrowing frusto-conical neck 206. The neck has a central bore 207 which is threaded at a lower end 208. The threaded end 208 engages an upper end of a water pipe 210. The water pipe 210 extends downwardly of the faucet through a channel in the basin wall.

The faucet body member 202 has an open upper end 211 into which the water control device 10 is placed. An interior surface 212 of the open upper end is threaded for engagement with a corresponding thread provided on an outside surface 99 of ring 90 (shown in figure 4). The water control device is aligned in the faucet body member 202 by an annular contact ring 213 which forms a ledge in the interior surface of the body member. The ledge sealably contacts a toroidal ring 215 carried by a lower end of the housing 80, as shown in figure 4.

The upper end of the water control device stands proud of the faucet body member. The upper end is provided with a domed end cap 216. The domed end cap is attached by a bolt 217 which threadably engages a truncated bore 219 to the knob 15 shown in figure 4.

The fluid inlet 11 confronts an annular top surface 218 to the neck 206. The toroidal seal 84 shown in figure 4, ensures a fluid tight seal between inlet and water pipe.

In use, a pressurised water supply is provided in the pipe 210. Water passes through the inlet and enters the device though an inlet passage 100 shown in figure 3. The passage is defined by the gap between the housing wall 101 and the body member wall 102. A hole 103 in the wall 102 provides fluid communication with a lower compartment 104 of cylindrical cavity 38. A refill orifice 37 is provided in an upper end of the wall 102. This orifice allows water to enter an upper compartment 106 of cavity 38. The upper and lower compartments are divided by a partition comprising the cup seal assembly 42.

In a dormant state, water is present in upper and lower compartments at the supply pressure. When it is desired to release water from the device, domed end cap 216 is depressed. The pushrod 58 is thereby moved downwards. The lower end 68 of the pushrod enters into the upper compartment. As the toroidal seal departs the lower end 77 of chassis member, water under pressure is allowed to escape from the upper compartment 106 and enter into an annular drainage space 110. The water enters almost instantaneously, so a simple push of the end cap 216 is sufficient to cause the pressure in the upper compartment to be released. The compression spring 57 ensures that the pushrod returns to the closed position on release. Water in the drainage space may the travel out of the device via drainage passage 24.

Because the pushrod need only move a very small distance (typically a couple of millimetres) downwards into the upper compartment before water escapes into the drainage space 110, the force required to activate the device is low.

Once pressure has been released from the upper compartment, a pressure differential will exist across the cup seal. Hence a higher pressure in the lower compartment will cause the piston assembly 40 to move upwards in the cavity 38. As the assembly moves upwards the valve member 46 departs the top surface of sleeve 26, and bung 47 is removed from the sleeve, thereby allowing water to exit from the outlet port. The water fills the lower portion of the faucet body member and flows out of the faucet through the spout.

Water will continue to flow until the small stream of water entering through the refill orifice 37 increases the pressure in the upper compartment until it is above pressure in the lower compartment. At this point the piston will move downwards back towards the closed position.

Since water is constantly escaping from the lower compartment as the upper compartment fills, the pressure in the lower compartment will be less than the supply pressure. Indeed a Bernoulli effect will tend to cause the valve member to approach the sleeve 26 to block the fluid flow. However, since water is incompressible, any motion downwards is dictated by the rate of filling of the upper compartment.

Thus the filling of the upper compartment results in an automatic cut-off for the fluid outlet. The time period before cut-off occurs may be adjusted by means of rotation of plug 16. As the spigot 31 approaches the refill orifice 37, the effective size of the refill channel 105 is decreased, thereby slowing down the rate of refill.

## Claims

1. A fluid supply control device, comprising:-
- a chamber adapted to contain fluid at a system pressure,
- partition means within said chamber and serving to define first and second compartments in said chamber, which partition means is movable in said chamber thereby to alter the relative size of each of said compartments,
- fluid outlet associated with said second compartment,
- fluid outlet closure means adapted to move with said partition means and adapted in a rest position to obturate the fluid outlet of said second compartment and in an open position to allow fluid flow from said outlet,
- fluid pressure release means for said first compartment,
the arrangement being such that operation of the fluid pressure release means causes or allows release of pressure from said first compartment, so that the resultant pressure differential across said partition means causes said partition to move, thereby causing said closure means to move to the open position.

2. A control device as claimed in claim 1 and characterised in that the second compartment is provided with one or more fluid inlets for fluid supplied at the system pressure.

3. A control device as claimed in claim 2 and characterised in that fluid associated with one inlet is heated fluid, and fluid associated with another inlet is cold fluid.

4. A control device as claimed in any preceding claim and characterised in that the pressure release means is adapted to permit selective release of fluid from the second compartment.

5. A control device as claimed in claim 4 and characterised in that the pressure release means comprises a spring-return valve adapted to release a limited amount of water before returning to a closed condition.

6. A control device as claimed in any preceding claim and characterised in that the first compartment is provided with a refill orifice in communication with fluid at the system pressure, thereby to allow controlled pressure recovery in said first compartment to the system pressure, so that the partition means returns the closure means to the rest position.

7. A control device as claimed in claim 6 and characterised in that said refill orifice communicates with the second compartment, thereby to provide said fluid at the system pressure.

8. A control device as claimed in claim 7 and characterised in that said refill orifices size is rendered variable by throttle means.

9. A control device as claimed in claim 8 and characterised in that the throttle means is adapted to be user-operable from the exterior of the chamber.

10. A control device as claimed in claim 9 and characterised in that the throttle means comprises a needle valve in the orifice.

11. A control device as claimed in any one of claims 8 to 10 and characterised in that the throttle means is adapted to be removable from the device thereby to facilitate access to said orifice from time to time.

12. A control device as claimed in any preceding claim and characterised in that the partition means comprises a partition adapted for translation by sliding in said chamber.

13. A control device as claimed in claim 12 and characterised in that a seal is provided between said partition and an interior surface of said chamber thereby to maintain sealing contact therebetween.

14. A control device as claimed in claim 13 and characterised in that said seal is made of leather.
